**Europäisches Patentamt**

**European Patent Office**

**Office européen des brevets**

(11) Publication number : **0 360 508 B1**

# EUROPEAN PATENT SPECIFICATION

(45) Date of publication of patent specification :
12.05.93 Bulletin 93/19

(51) Int. Cl.⁵ : **H01M 6/18**, H01B 1/12

(21) Application number : **89309410.2**

(22) Date of filing : **15.09.89**

(54) **Solid polymer electrolyte.**

(30) Priority : **22.09.88 JP 238123/88**

(43) Date of publication of application :
**28.03.90 Bulletin 90/13**

(45) Publication of the grant of the patent :
**12.05.93 Bulletin 93/19**

(84) Designated Contracting States :
**DE FR GB**

(56) References cited :
WO-A-85/02718
JP-A- 1 055 280
JP-A-60 070 421
JP-A-63 221 189
US-A- 2 747 009
SOLID STATE IONICS, vol. 18/19, part I,
January 1986, pages 326-331, Elsevier Science Publishers B.V., Amsterdam, NL; M.C.
WINTERSGILL et al.: "Conductivity, DSC,
FTIR, and NMR studies of poly(vinyl acetate)
complexed with alkali metal salts"

(56) References cited :
PATENT ABSTRACTS OF JAPAN, vol. 12, no.
80 (E-590)[2927], 12th March 1988; & JP-A-62
219 470 (HITACHI MAXELL LTD) 26-09-1987
PATENT ABSTRACTS OF JAPAN, vol. 12, no.
124 (E-601)[2971], 16th April 1988; & JP-A-62
249 367 (TOSHIBA CORP.) 30-10-1987
C & EN, 25th November 1985, pages 28-29; W.
WORTHY: "Polymer conducts protons at room
temperature"

(73) Proprietor : **YUASA CORPORATION**
**6-6, Johsai-cho**
**Takatsuki-City Osaka Prefecture (JP)**
Proprietor : **Yamamoto, Takakazu**
**26-18, 4-chome, Edaminami Midori-ku**
**Yokohama-City Kanagawa Prefecture (JP)**

(72) Inventor : **Yamamoto, Takakazu**
**26-18, 4-chome, Edaminami Midori-ku**
**Yokohama City Kanagawa Prefecture (JP)**

(74) Representative : **Bannerman, David Gardner et al**
**Withers & Rogers 4 Dyer's Buildings Holborn**
**London, EC1N 2JT (GB)**

## Description

The present invention relates to a solid polymer electrolyte to be used in battery, electrochromic display, condenser and other electrochemical devices.

Hitherto, complexes composed of a polymer material having polyethylene oxide, polypropylene oxide or ethylene oxide-propylene oxide copolymer in the main chain or side chains and an alkali metal salt or alkaline earth metal salt have been generally known as a solid polymer electrolyte.

The polyether material to constitute the said solid polymer electrolyte has a problem that it inconveniently softens at an elevated temperature and the mechanical strength thereof is thereby lowered since it has a low glass transition temperature (for instance, glass transition temperature of polyethylene oxide is -67°C).

The present invention has been effected so as to overcome the said problem, and the object thereof is to provide a solid polymer electrolyte which has excellent heat-resistance and high mechanical strength and which is inexpensive and can be utilized widely.

According to the invention we provide a solid polymer electrolyte prepared by incorporating an alkali metal salt or alkaline earth metal salt into polyvinyl alcohol, in which the number of mols of the alkali metal salt or alkaline earth metal salt is from 0.10 to 0.60 times the number of mols of the hydroxyl groups in the polyvinyl alcohol.

Various materials have been investigated and it has been found that, among various conventional polymers, polyvinyl alcohol which has the same helical structure as that of polyethylene oxide brings about a good result.

Specifically, the alkali metal ion or alkaline earth metal ion forms a complex together with the hydroxyl group of the polyvinyl alcohol to display an excellent ionic-conductivity.

The polyvinyl alcohol for use in the present invention is one generally obtained by saponification of polyvinyl acetate, and there are various polyvinyl alcohols having different proportion of saponification. Naturally, when the amount of the hydroxyl groups in the polyvinyl alcohol is small, the ionic-conductivity of the solid polymer electrolyte is low since the dissociation of the alkali metal salt or alkaline earth metal salt therefrom is retarded. Accordingly, the polyvinyl alcohol having the proportion of saponification of 100% displays the highest ionic-conductivity. However, there is no problem for practical use when the proportion of saponification is 80% or more.

The concentration of the alkali metal salt or alkaline earth metal salt to be incorporated into the polyvinyl alcohol is suitably from 0.10 to 0.60 times of the number of the moles of the hydroxyl groups in the polyvinyl alcohol.

For incorporating the alkali metal salt or alkaline earth metal salt into the polyvinyl alcohol, the polyvinyl alcohol and the said metal salt are dissolved in the common solvent and thereafter the said solvent is removed from the resulting solution to obtain a solid, or alternatively, a solid polyvinyl alcohol is dipped in a solution containing the said metal salt so that the solid polyvinyl alcohol is doped with the said metal salt.

As another characteristic feature of the present invention, a polar solvent may be applied to the polyvinyl alcohol to form a solution whereby a part or all of the salt in the polyvinyl alcohol is formed into an adduct with the said polar solvent thereby to extremely increase the ionic-conductivity of the solid polymer electrolyte. In place of the polar solvent, polyether may be applied to the polyvinyl alcohol and the same effect of improving the ionic-conductivity is attained. Further, addition of the polar solvent to the polyether-containing polyvinyl alcohol gives a much higher ionic-conductivity.

The ionic-conductivity may further vary in accordance with the molecular weight of the polyvinyl alcohol itself. Desirably, the molecular weight of the polyvinyl alcohol for use in the present invention is from 8,000 to 50,000 in view of the ionic-conductivity and also of the mechanical strength of the solid polymer electrolyte.

The polyether to be employed for the purpose is not specifically limited but any and every polyether can be used. However, polyethylene oxide or ethylene oxide-propylene oxide copolymer, especially random copolymer, is preferred.

The polar solvent to be employed for the purpose is also not specifically limited. However, dimethylsulfoxide, heated glycol, piperazine, heated glycerin, dimethylformamide, formamide and diethylenetriamine are perferred in view of the compatibility with polyvinyl alcohol, and aprotic heteroatomic solvents which are well compatible with polyether, such as propylene carbonate, are also preferred. The salt to be contained in the solid polymer electrolyte of the present invention is an alkali metal salt or alkaline earth metal salt, as having a high ionic-conductivity.

The alkali metal salt and alkaline earth metal salt for use in the present invention are not specifically limited but lithium salts are preferred.

In particular, salts of $LiClO_4$, $LiBF_4$, $LiAsF_6$, $LiCF_3SO_3$, $LiI$, $LiBr$ and $LiPF_6$ are preferred.

The present invention will be illustrated in more detail by way of the following examples, which, however, are not intended to restrict he scope of the present invention.

EXAMPLE 1:

100 mg of polyvinyl alcohol (proportion of saponification: 98.5%, molecular weight: 25,000) and 103 mg of lithium trifluoromethylsulfonate (molar ratio to OH is 0.3) were uniformly dissolved in 1 ml of dimethylsulfoxide and cast on a plastic support and dried at room temperature in vacuum for 72 hours to remove the dimethylsulfoxide therefrom. Accordingly, a 180 μm film was obtained.

The film was cut into a disk, 15 mm-diam. This was sandwiched between 13 mm-diam. platinum electrodes and the ionic-conductivity was obtained by complex impedance method. In this case, the ionic-conductivity was $4.4 \times 10^{-5}$ Scm$^{-1}$ at 25°C and $3.0 \times 10^{-4}$ Scm$^{-1}$ at 78.5°C.

COMPARATIVE EXAMPLE:

Another sample was prepared in the same manner as in Example 1, except that 25.5 mg of lithium trifluoromethylsulfonate (molar ratio to OH is 0.073) was used, and the ionic-conductivity was measured. As a result, it was $1.34 \times 10^{-7}$ Scm$^{-1}$ at 78.6°C.

EXAMPLE 2:

Other samples were prepared in the same manner as in Example 1, except that polyvinyl alcohol (proportion of saponification: 88%, molecular weight: 25,000) was used and the amount of lithium trifluoromethylsulfonate ($Li(CF_3SO_3)$) was varied as indicated in Table 1 below, and the ionic-conductivity thereof was measured.

The data (at 25°C) are shown in Table 1.

Table 1

| No. | Amount of $Li(CF_3SO_3)$ added (mg) | $Li^+$/OH (by mol) | Ionic-Conductivity (Scm$^{-1}$) |
|---|---|---|---|
| 1 | 23.5 | 0.084 | $7.0 \times 10^{-7}$ |
| 2 | 51.3 | 0.185 | $4.2 \times 10^{-4}$ |
| 3 | 69.2 | 0.250 | $1.2 \times 10^{-5}$ |
| 4 | 98.8 | 0.357 | $8.4 \times 10^{-5}$ |
| 5 | 154.0 | 0.556 | $4.1 \times 10^{-6}$ |

Investigating the infrared absorption spectrum of the sample No.3 in Table 1, a dimethylsulfoxide-specific absorption was noted at 300 cm$^{-1}$. Accordingly, the sample was confirmed to contain dimethylsulfoxide therein. The sample was dried at 80°C in vacuum for 9 hours to remove the dimethylsulfoxide therefrom in such degree that no IR absorption was noted at 3000 cm$^{-1}$, and accordingly, the ionic-conductivity lowered to $4.9 \times 10^{-3}$ Scm$^{-1}$.

The said phenomenon indicates that incorporation of a polar solvent such as dimethylsulfoxide in the solid polymer electrolyte causes noticeable elevation of the ionic-conductivity of the polymer electrolyte.

EXAMPLE 3:

100 mg of polyvinyl alcohol (proportion of saponification: 98.5%, molecular weight: 10,000) and 103 mg of lithium trifluoromethylsulfonate (molar ratio to OH is 0.3) were uniformly dissolved in 1 ml of dimethylsulfoxide and cast on a plastic support and dried at room temperature in vacuum for 72 hours to remove the dimethylsulfoxide therefrom. Accordingly, a 180 μm film was obtained.

The film was cut into a disk, 15 mm-diam. This was sandwiched between 13 mm-diam. platinum electrodes and the ionic-conductivity was obtained by complex impedance method. In this case, the ionic-conductivity was $9.2 \times 10^{-5}$ Scm$^{-1}$ at 25°C and $5.3 \times 10^{-4}$ Scm$^{-1}$ at 78.5°C.

EXAMPLE 4:

100 mg of polyvinyl alcohol (proportion of saponification: 98.5%, molecular weight: 10,000), 60 mg of polyethyleneoxide-triol (molecular weight: 3,000) and 103 mg of lithium trifluoromethyl-sulfonate (molar ratio to OH is 0.3) were uniformly dissolved in 1 ml of dimethylsulfoxide and cast on a plastic support and dried at room temperature in vacuum for 72 hours to remove the dimethylsulfoxide therefrom. Accordingly, a 180 μm film was obtained.

The film was cut into a disk, 15 mm-diam. This was sandwiched between 13 mm-diam. platinum electrodes and the ionic-conductivity was obtained by complex impedance method. In this case, the ionic-conductivity was 1.3 x $10^{-4}$ Scm$^{-1}$ at 25°C and 8.2 x $10^{-4}$ Scm$^{-1}$ at 78.5°C.

Also in Examples 3 and 4, the residual dimethylsulfoxide was confirmed.

Also is obvious from the results in the above-mentioned examples, the polyvinyl alcohol containing a metal salt such as tithium trifluoromethylsulfonate has a high ionic-conductivity.

Moreover, the polyvinyl alcohol has a high glass transition temperature (85°C) and has excellent heat-resistance and high mechanical strength.

In addition, the polyvinyl alcohol is a popular substance and is more inexpensive than the other conventional polyether type solid polymer electrolytes.

As explained in detail in the above, the present invention provides a widely usable and inexpensive solid polymer electrolyte having excellent heat-resistance and high mechanical strength, and the industrial value of the invention is extremely noticeable.


## Claims

1. A solid polymer electrolyte prepared by incorporated an alkali metal salt or alkaline earth metal salt into polyvinyl alcohol, in which the number of mols of the alkali metal salt or alkaline earth metal salt is from 0.10 to 0.60 times the number of mols of the hydroxyl groups in the polyvinyl alcohol.

2. The solid polymer electrolyte as claimed in claim 1, in which the polyvinyl alcohol has the proportion of saponification of from 80 to 100%.

3. The solid polymer electrolyte as claimed in claim 1, which further contains an adduct of a polar solvent and an alkali metal salt or alkaline earth metal salt, or a polar solvent singly, or a mixture of a polar solvent and the said adduct.

4. The solid polymer electrolyte as claimed in claim 1, which further contains polyether as a mixture or a solution.

5. The solid polymer electrolyte as claimed in claim 4, which further contains an adduct of polar solvent and an alkali metal salt or alkaline earth metal salt, or a polar solvent singly, or a mixture of a polar solvent and the said adduct.

6. The solid polymer electrolyte as claimed in claim 1, in which the polyvinyl alcohol has a molecular weight of from 8,000 or 50,000.

7. The solid polymer electrolyte as claimed in claim 3 or 5, in which the polar solvent is dimethylsulfoxide.

8. The solid polymer electrolyte as claimed in claim 4, in which the polyether is polyethylene oxide.

9. The solid polymer electrolyte as claimed in claim 4, in which the polyether is ethylene oxide-propylene oxide random copolymer.


## Patentansprüche

1. Polymerfestelektrolyt, hergestellt durch die Aufnahme eines Alkalimetallsalzes oder Erdalkalimetallsalzes in Polyvinylalkohol, in welchem die Anzahl der Mole des Alkalimetallsalzes oder Erdalkalimetallsalzes das 0,10 bis 0,60 fache der Anzahl der Mole der Hydroxylgruppen im Polyvinylalkohol beträgt.

EP 0 360 508 B1

2. Polymerfestelektrolyt nach Anspruch 1, in welchem der Polyvinylalkohol einen Verseifungsgrad von 80 bis 100% aufweist.

3. Polymerfestelektrolyt nach Anspruch 1, der weiterhin ein Addukt eines polaren Lösungsmittels und eines Alkalimetallsalzes oder Erdalkalimetallsalzes, oder ausschließlich ein polares Lösungsmittel, oder eine Mischung aus einem polaren Lösungsmittel und dem Addukt enthält.

4. Polymerfestelektrolyt nach Anspruch 1, der weiterhin Polyether in Form einer Mischung oder einer Lösung enthält.

5. Polymerfestelektrolyt nach Anspruch 4, der weiterhin ein Addukt eines polaren Lösungsmittels und eines Alkalimetallsalzes oder Erdalkalimetallsalzes, oder ausschließlich ein polares Lösungsmittel, oder eine Mischung aus einem polaren Lösungsmittel und dem Addukt enthält.

6. Polymerfestelektrolyt nach Anspruch 1, in welchem der Polyvinylalkohol ein Molekulargewicht von 8000 bis 50000 aufweist.

7. Polymerfestelektrolyt nach Anspruch 3 oder 5, in welchem das polare Lösungsmittel Dimethylsulfoxid ist.

8. Polymerfestelektrolyt nach Anspruch 4, in welchem der Polyether Polyethylenoxid ist.

9. Polymerfestelektrolyt nach Anspruch 4, in welchem der Polyether ein statistisches Copolymer von Ethylenoxid-Propylenoxid ist.


**Revendications**

1. Electrolyte solide polymère obtenu par incorporation d'un sel de métal alcalin ou d'un sel de métal alcalino-terreux dans un alcool polyvinylique, caractérisé en ce que le nombre de moles du sel de métal alcalin ou du sel de métal alcalino-terreux est compris entre 0,10 et 0,60 fois le nombre de moles des groupes hydroxyles dans l'alcool polyvinylique.

2. Electrolyte solide polymère selon la revendication 1, caractérisé en ce que l'alcool polyvinylique présente un taux de saponification compris entre 80 et 100 %.

3. Electrolyte solide polymère selon la revendication 1, caractérisé en ce qu'il comprend en outre un adduit d'un solvant polaire et d'un sel de métal alcalin ou d'un sel de métal alcalino-terreux, ou un solvant polaire seul, ou un mélange d'un solvant polaire et dudit adduit.

4. Electrolyte solide polymère selon la revendication 1, caractérisé en ce qu'il comprend en outre un polyéther en mixture ou en solution.

5. Electrolyte solide polymère selon la revendication 4, caractérisé en ce qu'il comprend en outre un adduit d'un solvant polaire et d'un sel de métal alcalin ou d'un sel de métal alcalino-terreux, ou un solvant polaire seul, ou un mélange d'un solvant polaire et dudit adduit.

6. Electrolyte solide polymère selon la revendication 1, caractérisé en ce que l'alcool polyvinylique présente un poids moléculaire compris entre 8.000 et 50.000.

7. Electrolyte solide polymère selon l'une des revendications 3 ou 5, caractérisé en ce que le solvant polaire est du sulfoxyde diméthylique.

8. Electrolyte solide polymère selon la revendication 4, caractérisé en ce que le polyéther est de l'oxyde de polyéthylène.

9. Electrolyte solide polymère selon la revendication 4, caractérisé en ce que le polyéther est un copolymère non ordonné oxyde d'éthylène - oxyde de propylène.